# EUROPEAN PATENT APPLICATION

(11) **EP 4 579 139 A1**
(43) Date of publication of application: **02.07.2025**
(21) Application number: 24223427.6
(22) Date of filing: 27.12.2024
(51) Int. Cl.: F24F 11/79, F24F 13/14

(54) **CONTROL METHOD FOR AIR OUTLET APPARATUS AND AIR OUTLET APPARATUS**

(30) Priority: 29.12.2023 CN 202311867840
(71) Applicant: GD Midea Environment Appliances MFG Co., Ltd., Zhongshan, Guangdong 528425 (CN)
(72) Inventor: WANG, Runfa, Zhongshan (CN); YE, Yongxin, Zhongshan (CN); WANG, Biao, Zhongshan (CN); GUO, Xinsheng, Zhongshan (CN); ZOU, Dingshan, Zhongshan (CN); ZHANG, Zhuangyao, Zhongshan (CN); HUANG, Lianjie, Zhongshan (CN); MENG, Dongcheng, Zhongshan (CN); XIE, Fuxiong, Zhongshan (CN); WANG, Rui, Zhongshan (CN); YE, Sijin, Zhongshan (CN)
(74) Representative: Ran, Handong

(57) **Abstract**

Provided are a control method for an air outlet apparatus and an air outlet apparatus. The air outlet apparatus includes a swinging mechanism configured to control an air outlet direction. The control method includes: determining, during an operation of the air outlet apparatus and swinging of the swinging mechanism, two positions selected by a user within a swinging range of the swinging mechanism as a starting position and an ending position respectively subsequent to receiving a customized air outlet angle instruction; and controlling the swinging mechanism to swing between the starting position and the ending position. In this way, the user can directly send the customized air outlet angle instruction to the air outlet apparatus by a hand-held controller or on a control panel of the air outlet apparatus, and select an air outlet angle of the air outlet apparatus as desired, expanding an application range of the air outlet apparatus and improving user experience.

## Description

### FIELD

The present invention relates to the field of air outlet apparatus technologies, and more particularly, to a control method for an air outlet apparatus and an air outlet apparatus.

### BACKGROUND

Fan shaking function is a basic function commonly used by users, and selection of multiple shaking angles is also a common function of fans. Conventional fans generally have fixed shaking angles such as 60 degrees and 90 degrees. During use, when a small swinging angle is selected, a swinging range may be insufficient. However, selecting a larger swinging angle may result in a longer waiting time for the user. In addition, a limited number of available angle options makes it difficult to customize a swinging range for the users as desired.

### SUMMARY

A main object of the present invention is to provide a control method for an air outlet apparatus and an air outlet apparatus, aiming at solving the problem that the conventional air outlet apparatus has fewer angles that can be selected by users, which makes it difficult to customize a swinging range for the user as desired.

To achieve the above object, a control method for an air outlet apparatus is provided according to the present invention. The air outlet apparatus includes a swinging mechanism configured to control an air outlet direction. The control method includes: determining, during an operation of the air outlet apparatus and swinging of the swinging mechanism, two positions selected by a user within a swinging range of the swinging mechanism as a starting position and an ending position respectively subsequent to receiving a customized air outlet angle instruction; and controlling the swinging mechanism to swing between the starting position and the ending position.

In another exemplary embodiment of the present invention, the determining, during the operation of the air outlet apparatus and the swinging of the swinging mechanism, the two positions selected by the user within the swinging range of the swinging mechanism as the starting position and the ending position respectively subsequent to receiving the customized air outlet angle instruction includes: controlling, in response to receiving the customized air outlet angle instruction, the swinging mechanism to operate when the air outlet apparatus is operating and the swinging mechanism is in a stopped state; and determining two positions selected by the user within the swinging range of the swinging mechanism as the starting position and the ending position respectively during the swinging of the swinging mechanism.

In another exemplary embodiment of the present invention, the controlling, in response to receiving the customized air outlet angle instruction, the swinging mechanism to operate when the air outlet apparatus is operating and the swinging mechanism is in the stopped state includes: controlling, in response to receiving the customized air outlet angle instruction, the swinging mechanism to swing within a maximum allowable range when the swinging mechanism is in the stopped state.

In another exemplary embodiment of the present invention, the controlling, in response to receiving the customized air outlet angle instruction, the swinging mechanism to operate when the air outlet apparatus is operating and the swinging mechanism is in the stopped state includes: controlling, in response to receiving the customized air outlet angle instruction, the swinging mechanism to swing within a predetermined swinging range when the swinging mechanism is in the stopped state. The predetermined swinging range is symmetrical with respect to a center of a maximum allowable swinging range of the swinging mechanism.

In another exemplary embodiment of the present invention, the controlling, in response to receiving the customized air outlet angle instruction, the swinging mechanism to operate when the air outlet apparatus is operating and the swinging mechanism is in the stopped state includes: matching, in response to receiving the customized air outlet angle instruction, a historical swinging range corresponding to a customized air outlet angle based on the customized air outlet angle instruction when the swinging mechanism is in the stopped state; and controlling the swinging mechanism to swing within the historical swinging range.

In another exemplary embodiment of the present invention, the determining, during the operation of the air outlet apparatus and the swinging of the swinging mechanism, the two positions selected by the user within the swinging range of the swinging mechanism as the starting position and the ending position respectively subsequent to receiving the customized air outlet angle instruction includes: during the operation of the air outlet apparatus and the swinging of the swinging mechanism, in response to receiving one position selected by the user within the swinging range of the swinging mechanism, when a further position selected by the user within the swinging range of the swinging mechanism is received within a predetermined period of time, determining the one position and the further position as the starting position and the ending position respectively.

In another exemplary embodiment of the present invention, the control method further includes, subsequent to the controlling the swinging mechanism to swing between the starting position and the ending position: controlling, in response to receiving the customized air outlet angle instruction again, the swinging mechanism to swing in a current swinging range; determining two new positions selected by the user within the swinging range of the swinging mechanism as a new starting position and a new ending position respectively during the swinging of the swinging mechanism; and controlling the swinging mechanism to swing between the new starting position and the new ending position.

In another exemplary embodiment of the present invention, the determining, during the operation of the air outlet apparatus and the swinging of the swinging mechanism, the two positions selected by the user within the swinging range of the swinging mechanism as the starting position and the ending position respectively subsequent to receiving the customized air outlet angle instruction includes: during the operation of the air outlet apparatus and the swinging of the swinging mechanism, determining, in response to receiving the customized air outlet angle instruction, a received position of resistance opposite to a swinging direction as a first position, and controlling the swinging mechanism to change the swinging direction; and determining a re-received position of resistance opposite to the swinging direction as a second position, controlling the swinging mechanism to change the swinging direction, and determining the first position and the second position as the starting position and the ending position respectively.

An air outlet apparatus is further provided according to the present invention. The air outlet apparatus includes a body including a blower and a swinging mechanism, a manipulation device, and a control device. The swinging mechanism is configured to control an air outlet direction of the blower. The manipulation device is disposed at the body, and is configured to receive a customized air outlet angle instruction. The control device is electrically connected to the swinging mechanism and the manipulating device. The control device includes a memory, a processor, and a control program for the air outlet apparatus stored on the memory and executable on the processor. The control program for the air outlet apparatus is configured to implement the steps of the above control method.

In another exemplary embodiment of the present invention, the air outlet apparatus includes a fan, an air conditioner, or a heater.

In the technical solution of the present invention, the air outlet apparatus includes the swinging mechanism. The swinging mechanism is mainly configured to adjust the air outlet direction of the air outlet apparatus. Specific configuration of the swinging mechanism is not limited, which may drive the blower of the air outlet apparatus to swing to adjust the air outlet direction of the blower and thus adjust the air outlet direction of the air outlet apparatus. In another embodiment, the specific configuration of the swinging mechanism may drive an air deflector at an air outlet of the air outlet apparatus to swing to adjust a direction in which the air deflector guides an airflow, and thus to adjust the air outlet direction of the air outlet apparatus. The swinging mechanism is configured in such a way to adjust the air outlet direction of the air outlet apparatus. The present invention provides a control method on the basis that the swinging mechanism is provided to adjust the air outlet direction of the air outlet apparatus. In an exemplary embodiment of the present invention, when the air outlet apparatus is operating and the swinging mechanism is swinging, the user can send a customized air outlet angle instruction to the air outlet apparatus by a hand-held controller or through a control panel of the air outlet apparatus. The air outlet apparatus enters a customized air outlet angle setting state. In this case, as the swinging mechanism operates within the current swinging range, the user can select two positions sequentially within the current swinging range during the swinging process of the swinging mechanism to determine the starting position and the ending position. A region between the starting position and the ending position becomes a new swinging range for the swinging mechanism, which may swing between the starting position and the ending position. For example, when the air outlet apparatus enters the customized air outlet angle setting state, as the swinging mechanism swings, when the swinging mechanism swings to the first position, the user selects the first position as the starting position. Then, the swinging mechanism continues to operate within the current swinging range. When the swinging mechanism swings to the second position, the user selects the second position as the ending position. In this case, the swinging mechanism immediately changes the swinging direction to swing between the first position and the second position. A region between the first position and the second position is determined as the new swinging range for the swinging mechanism. In this way, the user can directly send the customized air outlet angle instruction to the air outlet apparatus by the hand-held controller or on the control panel of the air outlet apparatus, and select an air outlet angle of the air outlet apparatus as desired, expanding an application range of the air outlet apparatus and improving user experience.

### BRIEF DESCRIPTION OF THE DRAWINGS

To more clearly illustrate embodiments of the present invention or technical solutions in the related art, accompanying drawings required to be used in the description of the embodiments or in the related art are briefly described below. Obviously, the accompanying drawings in the following descriptions are only some embodiments of the present invention. For those skilled in the art, other accompanying drawings can be obtained from structures illustrated in these accompanying drawings without creative labor.
FIG. 1 is a schematic flowchart illustrating a control method for an air outlet apparatus according to a first embodiment of the present invention.
FIG. 2 is a schematic flowchart illustrating a control method for an air outlet apparatus according to a second embodiment of the present invention.
FIG. 3 is a schematic flowchart illustrating a control method for an air outlet apparatus according to a third embodiment of the present invention.
FIG. 4 is a schematic flowchart illustrating a control method for an air outlet apparatus according to a fourth embodiment of the present invention.
FIG. 5 is a schematic flowchart illustrating a control method for an air outlet apparatus according to a fifth embodiment of the present invention.
FIG. 6 is a schematic flowchart illustrating a control method for an air outlet apparatus according to a sixth embodiment of the present invention.
FIG. 7 is a schematic flowchart illustrating a control method for an air outlet apparatus according to a seventh embodiment of the present invention.
FIG. 8 is a schematic flowchart illustrating a control method for an air outlet apparatus according to an eighth embodiment of the present invention.
FIG. 9 is a schematic structural view of a control device in a hardware operating environment involved in the first embodiment illustrated in FIG. 1.

Description of reference numerals of the accompanying drawings:

| Reference numerals | Term | Reference numerals | Term |
|---|---|---|---|
| 1001 | Processor | 1004 | Information interface |
| 1002 | Communication bus | 1005 | Memory |
| 1003 | User interface | | |

Implementations of the objects, functional features, and advantages of the present invention will be further described in conjunction with the embodiments and with reference to the accompanying drawings.

### DETAILED DESCRIPTION OF THE EMBODIMENTS

Technical solutions according to embodiments of the present invention will be described clearly and completely below in combination with accompanying drawings of the embodiments of the present invention. Obviously, the embodiments described below are only part of the embodiments of the present invention, rather than all embodiments of the present invention. On a basis of the embodiments of the present invention, all other embodiments obtained by those skilled in the art without creative labor shall fall within the scope of the present invention.

It should be noted that all directional indications, such as up, down, left, right, front, and rear, in the embodiments of the present invention are only used to explain relative positions between various components, movements of various components, or the like under a predetermined posture (as illustrated in the figures). When the predetermined posture changes, the directional indications also change accordingly.

In addition, descriptions, such as "first" and "second", in the present invention are only used for descriptive purposes, and cannot be understood as indicating or implying relative importance or implicitly indicating the number of indicated technical features. Therefore, the features associated with "first" and "second" may explicitly or implicitly include at least one of the features. In addition, the term "and/or" used throughout the whole context refers to three possible schemes. Taking "A and/or B" as an example, the three possible schemes include a scheme of A alone, a scheme of B alone, or a scheme where both A and B are satisfied simultaneously. In addition, the technical solutions may be combined according to various embodiments of the present invention, but these combinations must be based on the fact that they can be realized by those skilled in the art. When a combination of the technical solutions is contradictory or unattainable, the combination of the technical solutions neither exists nor falls within the scope of the present invention.

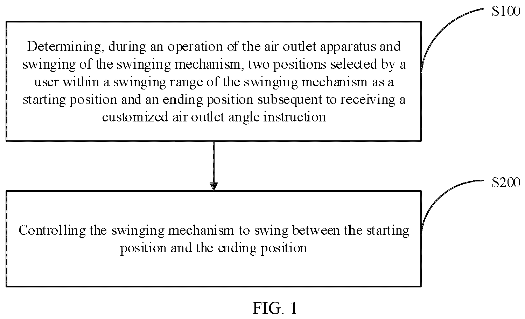

A control method for an air outlet apparatus is provided according to the present invention. FIGS. 1 to 8 are specific embodiments of the control method for the air outlet apparatus provided by the present invention. The control method for the air outlet apparatus is described below with reference to specific drawings.

As illustrated in FIG. 1, the air outlet apparatus includes a swinging mechanism configured to control an air outlet direction. The control method for the air outlet apparatus includes operations at blocks.

At block S100, during an operation of the air outlet apparatus and swinging of the swinging mechanism, two positions selected by a user within a swinging range of the swinging mechanism are determined as a starting position and an ending position respectively subsequent to receiving a customized air outlet angle instruction.

During the swinging of the swinging mechanism within the swinging range, the user may successively select two mutually spaced positions within a current swinging range. The two mutually spaced positions are determined as the starting position and the ending position respectively within a new swinging range of the swinging mechanism.

At block S200, the swinging mechanism is controlled to swing between the starting position and the ending position.

It should be understood that a range between the starting position and the ending position is the new swinging range of the swing mechanism. After the new swinging range of the swing mechanism is determined, the current swinging range of the swinging mechanism is adjusted to the new swinging range.

In the technical solution of the present invention, the air outlet apparatus is provided with the swinging mechanism. The swinging mechanism is mainly configured to adjust the air outlet direction of the air outlet apparatus. Specific configuration of the swinging mechanism is not limited, which may drive a blower of the air outlet apparatus to swing to adjust an air outlet direction of the blower and thus adjust an air outlet direction of the air outlet apparatus. In another embodiment, the specific configuration of the swinging mechanism may drive an air deflector at an air outlet of the air outlet apparatus to swing to adjust a direction in which the air deflector guides an airflow, and thus to adjust the air outlet direction of the air outlet apparatus. The swinging mechanism is specifically configured in such a way as to adjust the air outlet direction of the air outlet apparatus. The present invention provides a control method on the basis that the swinging mechanism is provided to adjust the air outlet direction of the air outlet apparatus. In an exemplary embodiment of the present invention, when the air outlet apparatus is operating and the swinging mechanism is swinging, the user can send the customized air outlet angle instruction to the air outlet apparatus by a hand-held controller or on a control panel of the air outlet apparatus. The air outlet apparatus enters a customized air outlet angle setting state. In this case, as the swinging mechanism operates within the current swing range, the user selects two positions sequentially within the current swinging range of the swinging mechanism during the swinging of the swinging mechanism to determine the starting position and the ending position. A region between the starting position and the ending position becomes a new swinging range for the swinging mechanism, which may swing between the starting position and the ending position. For example, when the air outlet apparatus enters the customized air outlet angle setting state, as the swinging mechanism swings, the user selects a first position as the starting position when the swinging mechanism swings to the first position. Then, the swinging mechanism continues to operate within the current swinging range. When the swinging mechanism swings to a second position, the user selects the second position as the ending position. In this case, the swinging mechanism immediately changes the swinging direction to swing between the first position and the second position. A region between the first position and the second position is determined as the new swinging range for the swinging mechanism. In this way, the user can directly send the customized air outlet angle instruction to the air outlet apparatus by the hand-held controller or on the control panel of the air outlet apparatus, and select an air outlet angle of the air outlet apparatus as desired, expanding an application range of the air outlet apparatus and improving user experience.

It should be noted that, to further facilitate the user to observe whether the air outlet apparatus has entered the customized air outlet angle setting state. In embodiments of the present invention, the air outlet apparatus further includes an indicator light configured to display different colors. When the air outlet apparatus operates normally and the swinging mechanism swings, the indicator light displays a color. Once the user sends the customized air outlet angle instruction to the air outlet apparatus, causing the air outlet apparatus to enter the customized air outlet angle setting state. The color of the indicator light then changes to notify the user that the air outlet apparatus is in the customized air outlet angle setting state. After the user selects two positions sequentially within the current swinging range of the swinging mechanism to determine the starting position and the ending position, and the swinging mechanism swings between the starting position and the ending position, the indicator light reverts to a previous color, which indicates to the user that customized air outlet angle setting is completed, and the air outlet apparatus resumes normal operation.

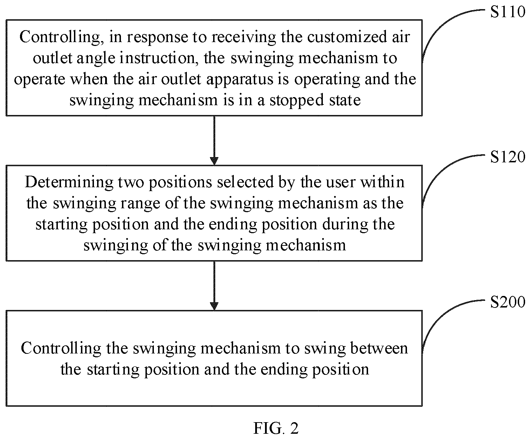

Further, as illustrated in FIG. 2, in a second embodiment of the present invention, the operation at block S 100 includes operations at blocks below.

At block S 110, when the air outlet apparatus is operating and the swinging mechanism is in a stopped state, the swinging mechanism is controlled to operate in response to receiving the customized air outlet angle instruction.

It should be understood that when the air outlet apparatus is operating normally and the swinging mechanism is not in operation and is in the stopped state, the user sends the customized air outlet angle instruction to the air outlet apparatus. After the air outlet apparatus receives the customized air outlet angle instruction sent by the user, the air outlet apparatus can automatically start the swinging mechanism to cause the swinging mechanism to start swinging.

At block S120, two positions selected by the user within the swinging range of the swinging mechanism are determined as the starting position and the ending position respectively during the swinging of the swinging mechanism.

After the air outlet apparatus receives the customized air outlet angle instruction sent by the user, the air outlet apparatus starts the swinging mechanism to swing. The air outlet apparatus can automatically enter the customized air outlet angle setting state to enable the user to select the starting position and the ending position within the current swinging range of the swinging mechanism, and further to enable the air outlet apparatus to perform air outlet operation between the starting position and the ending position.

During use of the air outlet apparatus, the customized air outlet angle instruction is typically obtained through user operations. However, when the air outlet apparatus is operating normally and the swinging mechanism is not operating and is in the stopped state, the user may need to start the swinging mechanism before setting the customized air outlet angle and the air outlet apparatus can obtain the customized air outlet angle instruction, which may be inconvenient. Therefore, in this embodiment, a method is provided for initiating the swinging mechanism when the swinging mechanism is in the stopped state. When the air outlet apparatus is operating but the swinging mechanism does not operate, if the air outlet apparatus receives the customized air outlet angle instruction, the swinging mechanism is initiated and the air outlet apparatus is controlled to enter the customized air outlet angle setting state. In this case, during the swinging of the swinging mechanism, the user can still select two positions sequentially within the current swinging range of the swinging mechanism as the starting position and the ending position respectively. A region between the starting position and the ending position becomes a new swinging range for the swinging mechanism, achieving a purpose of customizing an air outlet range of the air outlet apparatus. Thus, the user does not need to perform additional operations such as starting the swinging mechanism, reducing complexity of user operations.

In other embodiments of the present invention, when the air outlet apparatus automatically starts the swinging mechanism to cause the swinging mechanism to swing after receiving the customized air outlet angle instruction issued by the user, a swinging range of the swinging mechanism may be selected to be multiple types.

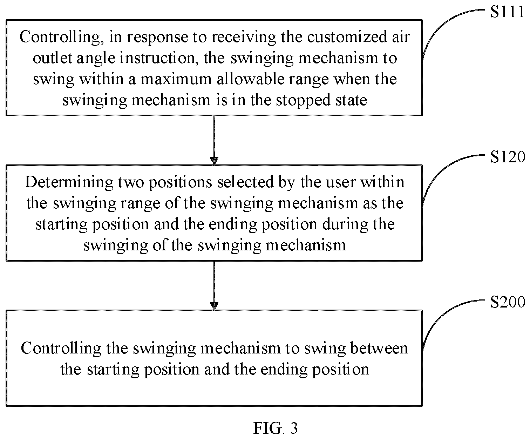

As illustrated in FIG. 3, in a third embodiment of the present invention, the operation at block S110 includes operations at blocks below.

At block S 111, when the swinging mechanism is in the stopped state, the swinging mechanism is controlled to swing within a maximum allowable range in response to receiving the customized air outlet angle instruction.

In the previous embodiment, it is described that the air outlet apparatus can start the swinging mechanism to cause the swinging mechanism to swing after receiving the customized air outlet angle instruction issued by the user. Therefore, in this embodiment, the swinging range for the swinging mechanism is provided after the swinging mechanism is initiated. That is, when the air outlet apparatus is operating normally and the swinging mechanism is not in operation and is in the stopped state, the user sends the customized air outlet angle instruction to the air outlet apparatus. After the air outlet apparatus receives the customized air outlet angle instruction sent by the user, the air outlet apparatus can start the swinging mechanism. Furthermore, there are no limits on a swinging angle of the swinging mechanism. Instead, the maximum allowable swinging range of the swinging mechanism is set as the current swinging range of the swinging mechanism to allow the swinging mechanism to operate within the maximum allowable range. In this case, the air outlet apparatus enters the customized air outlet angle setting state. When the swinging mechanism swings within the maximum allowable swinging range, the user can select two mutually spaced positions sequentially as the starting position and ending position. Therefore, the swinging range of the swinging mechanism can be changed, allowing the air outlet apparatus to perform the air outlet operation within a customized air outlet range. Such a configuration enables the user to select the starting position and the ending position within the maximum swinging range of the swinging mechanism, sufficiently satisfying requirements of the user, and preventing the user from being unable to select a desired customized air outlet range.

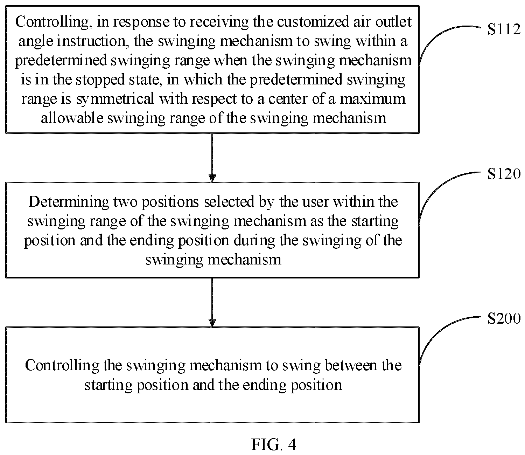

In addition, the swinging range of the swing mechanism may be selected as another range. As illustrated in FIG. 4, in a fourth embodiment of the present invention, the operation at block S 110 includes operations at blocks below.

At block S112, when the swinging mechanism is in the stopped state, the swinging mechanism is controlled to swing within a predetermined swinging range in response to receiving the customized air outlet angle instruction. The predetermined swinging range is symmetrical with respect to a center of a maximum allowable swinging range of the swinging mechanism.

In the previous embodiment, after the swinging mechanism is initiated, the maximum allowable swinging range of the swinging mechanism is the current swinging range to ensure that the user can select the starting position and the ending position within the maximum swinging range of the swinging mechanism, fully meeting requirements of the user. However, there are scenarios where the user does not need to select the starting position and the ending position within the maximum swinging range of the swinging mechanism. Therefore, in this embodiment, another swinging range of the swinging mechanism is provided after the swinging mechanism automatically starts. That is, when the air outlet apparatus is operating normally and the swinging mechanism is not in operation and is in the stopped state, the user sends the customized air outlet angle instruction to the air outlet apparatus. After the air outlet apparatus receives the customized air outlet angle instruction sent by the user, the air outlet apparatus starts the swinging mechanism. Moreover, the swinging mechanism is controlled to swing within the predetermined swinging range. It should be understood that the predetermined swinging range is smaller than the maximum allowable swinging range. A time required for the swinging mechanism to swing from the starting position to the ending position within the predetermined swinging range is smaller than a time required for the swinging mechanism to swing from the starting position to the ending position within the maximum allowable swinging range. In this case, the air outlet apparatus also enters the customized air outlet angle setting state. When the swinging mechanism swings within the predetermined swinging range, the user can sequentially select two mutually spaced positions as the starting and the ending position respectively, changing the swinging range of the swinging mechanism, and thus allowing the air outlet apparatus to perform the air outlet operation within the customized air outlet range. Therefore, the user does not need to select two positions having a sufficiently large space between the two positions as the starting position and the ending position. When the swinging mechanism swings within the predetermined swinging range, a waiting time of the user for selecting the two positions can be saved, which allows the user to more quickly determine the customized air outlet range, making operation more convenient and further meeting the user requirements.

It should be noted that when the swinging mechanism is initiated, if the swinging mechanism is not within the predetermined swinging range, the swinging mechanism swings to the starting position or the ending position of the predetermined swinging range, and then swings within the predetermined swinging range.

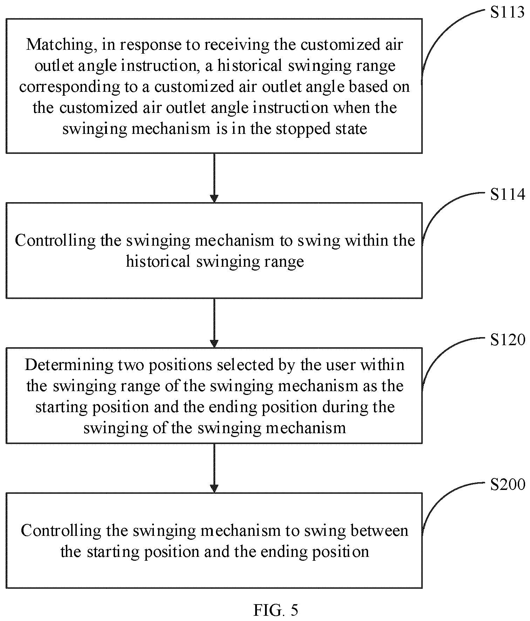

Further, in the above two embodiments, after the swinging mechanism starts, the user still needs to continue to select the starting position and the ending position within the current swinging range of the swinging mechanism, to achieve the purpose of causing the air outlet apparatus to perform the air outlet operation based on the customized air outlet angle. As illustrated in FIG. 5, when the user needs to directly cause the air outlet apparatus to perform the air outlet operation based on the customized air outlet angle after the swinging mechanism starts. In a fifth embodiment of the present invention, the operation at block S 110 includes operations at blocks below.

At block S 113, when the swinging mechanism is in the stopped state, in response to receiving the customized air outlet angle instruction, a historical swinging range corresponding to a customized air outlet angle is matched based on the customized air outlet angle instruction.

It should be understood that the historical swinging range is a range between the starting position and the ending position when the swinging mechanism last swung within the customized air outlet angle. Thus, after the air outlet apparatus receives the customized outlet angle instruction issued by the user, the swinging mechanism is initiated, and the air outlet apparatus can automatically obtain the starting position and the ending position selected by the user during the last air outlet operation of the air outlet apparatus based on the customized air outlet angle, and select the starting position and the ending position as a current starting position and a current ending position. In this way, the current swinging range of the swinging mechanism matches the historical swinging range of the swinging mechanism.

At block S114, the swinging mechanism is controlled to swing within the historical swinging range.

The swinging mechanism is controlled to swing between the current starting position and the current ending position.

In this embodiment, when the air outlet apparatus is operating normally and the swinging mechanism is not in operation and is in the stopped state, the user sends the customized air outlet angle instruction to the air outlet apparatus. After the air outlet apparatus receives the customized air outlet angle instruction sent by the user, the air outlet apparatus can start the swinging mechanism. Furthermore, the air outlet apparatus obtains the starting position and the ending position selected by the user during the last air outlet operation where the air outlet apparatus performs the air outlet operation based on the customized air outlet angle, and selects the starting position and the ending position as the current starting position and the current ending position. In this case, the swinging mechanism can directly swing between the current starting position and the current ending position. Similarly, the air outlet apparatus also enters the customized air outlet angle setting state. When the swinging mechanism swings between the current starting position and the current ending position, the user can sequentially select two mutually spaced positions as the new starting position and the new ending position to change the swinging range of the swinging mechanism and allow the air outlet apparatus to modify the customized air outlet range for air outlet operation. Therefore, after receiving the customized air outlet angle instruction from the user, the air outlet apparatus can control the swinging mechanism to directly swing within the historical swinging range, making the operation more convenient and thus enhancing the user experience.

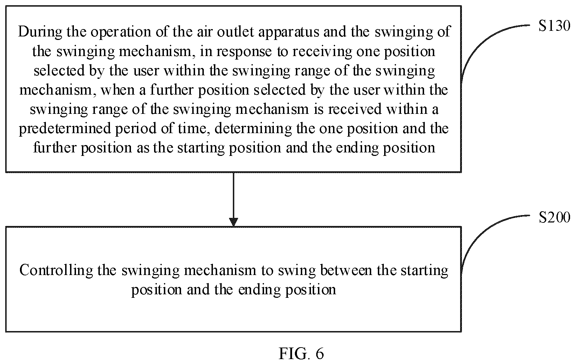

In addition, as illustrated in FIG. 6, in a sixth embodiment of the present invention, the operation at block S 100 includes operations at blocks below.

At block S130, during the operation of the air outlet apparatus and the swinging of the swinging mechanism, in response to receiving one position selected by the user within the swinging range of the swinging mechanism, when a further position selected by the user within the swinging range of the swinging mechanism is received within a predetermined period of time, the one position and the further position are determined as the starting position and the ending position respectively.

As the air outlet apparatus receives the customized air outlet angle instruction, during the swinging of the swinging mechanism, when the swinging mechanism swings to the one position within the swinging range, the user selects the one position and the air outlet apparatus determines the one position as the starting position. The swinging mechanism continues to swing within the swinging range. When the swinging mechanism swings to the further position within the swinging range and is within the predetermined period of time, the user selects the further position and the air outlet apparatus determines the further position as the ending position. In this case, a range between the starting position and the ending position is a new swinging range of the swinging mechanism. It should be understood that the user needs to select the starting position and the ending position within the predetermined period of time to complete the customized air outlet angle setting for the air outlet apparatus. When the user does not complete selection of the starting position and the ending position within the predetermined period of time, the air outlet apparatus may exit the customized air outlet angle setting state, and the swinging mechanism may continue to swing within the current swinging range. In this way, accidental operations by the user can be avoided, such as issuing the customized air outlet angle instruction, which may otherwise change the swinging range of the swinging mechanism and thus change the customized air outlet angle of the air outlet apparatus.

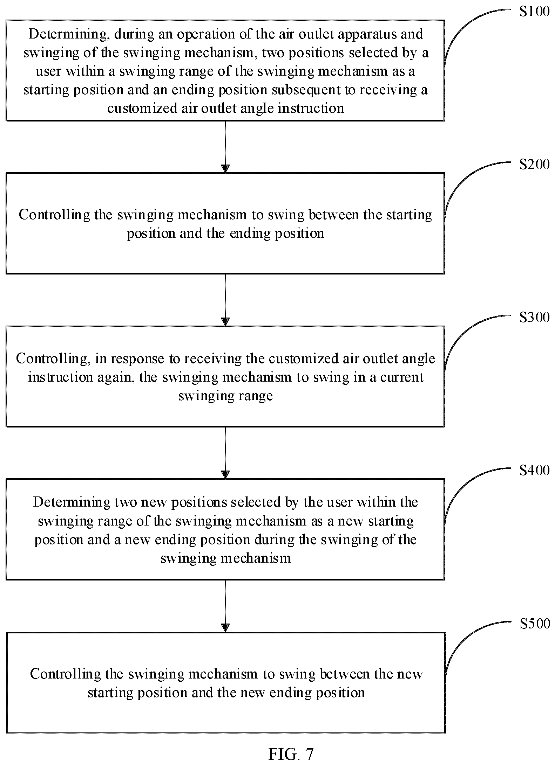

Further, as illustrated in FIG. 7, in a seventh embodiment of the present invention, the control method further includes, subsequent to the operation at block S200, operations at blocks below.

At block S300, in response to receiving the customized air outlet angle instruction again, the swinging mechanism is controlled to swing in a current swinging range.

When the swinging mechanism swings between the starting position and the ending position, if the user re-issues the customized air outlet angle instruction, the air outlet apparatus re-enters the customized air outlet angle setting state after receiving the customized air outlet angle instruction again. In this case, the swinging mechanism continues to swing between the starting position and the ending position.

At block S400, two new positions selected by the user within the swinging range of the swinging mechanism are determined as a new starting position and a new ending position respectively during the swinging of the swinging mechanism.

During the swinging of the swinging mechanism within the current swinging range, the user can successively select two mutually spaced new positions within the current swinging range. At least one of the two mutually spaced new positions differs from the current starting position and the current ending position. In this case, the two mutually spaced new positions are determined as the new starting position and the new ending position respectively.

At block S500, the swinging mechanism is controlled to swing between the new starting position and the new ending position.

It should be understood that the range between the new starting position and the new ending position is the new swinging range of the swing mechanism. After the new swinging range of the swing mechanism is determined, the current swinging range of the swinging mechanism is adjusted to the new swinging range.

When the user needs to further refine the swinging range of the swinging mechanism within the current swinging range of the swinging mechanism, the swinging mechanism can reissue the customized air outlet angle instruction to cause the air outlet apparatus to enter the customized air outlet angle setting state. In this case, the swinging mechanism can directly swing between the current starting position and the current ending position. In this process, the user can sequentially select two mutually spaced new positions between the current starting position and the current ending position as the new starting position and the new ending position to allow for further refinement of the swinging range of the swinging mechanism, enabling the air outlet apparatus to more precisely customize the air outlet range for the air outlet operation. In this way, the user can further select a new swinging range within the current swinging range without removing a current customized air outlet range, which simplifies the operation and further enhances the user experience.

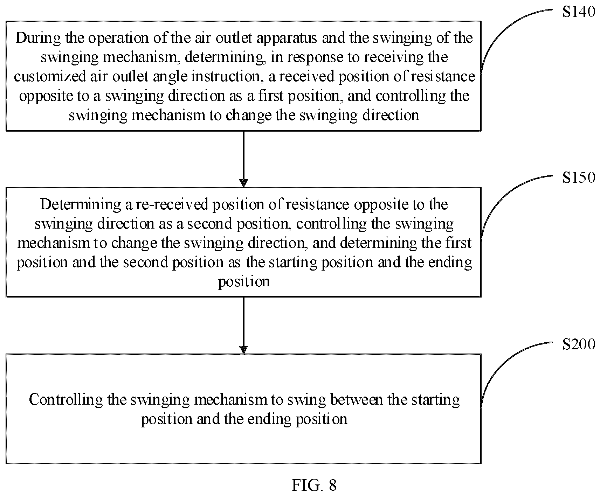

In addition, as illustrated in FIG. 8, in an eighth embodiment of the present invention, the operation at block S100 includes operations at blocks below.

At block S140, during the operation of the air outlet apparatus and the swinging of the swinging mechanism, in response to receiving the customized air outlet angle instruction, a received position of resistance opposite to a swinging direction is determined as a first position, and the swinging mechanism is controlled to change the swinging direction.

It should be understood that when the swinging mechanism swings in a first direction, if the swinging mechanism is subjected to a resistance force opposite to the first direction and having a predetermined magnitude to prevent the swinging mechanism from continuing to swing in the first direction, the swinging mechanism is controlled to change the swinging direction to swing in a second direction opposite to the first direction. The resistance force is regarded as a first selection by the user, and a position subject to the resistance force is regarded as the first position selected by the user.

At block S150, a re-received position of resistance opposite to the swinging direction is determined as a second position, the swinging mechanism is controlled to change the swinging direction, and the first position and the second position are determined as the starting position and the ending position respectively.

It should be understood that when the swinging mechanism swings in the second direction, if the swinging mechanism is subjected to the resistance force again, the direction of the resistance force is opposite to the second direction and has a predetermined magnitude to prevent the swinging mechanism from continuing to swing in the second direction. The swinging mechanism is controlled to change the swinging direction again and re-swing in the first direction, and the resistance force is determined as a second selection by the user, and thus a position subject to the resistance force is determined as the second position selected by the user. The first position and the second position are the starting position and the ending position respectively.

In the above embodiments, position selection is realized by applying an external force to the swinging mechanism to prevent the swinging mechanism from continuing to swing in the current direction. When the swinging mechanism swings to the starting position to be selected by the user during the swing of the swinging mechanism, an external force opposite to the current swinging direction is applied to the swinging mechanism to prevent the swinging mechanism from continuing to swing in the current direction, forcing the swinging mechanism to change the swinging direction, and thus taking the position as the starting position. Subsequently, when the swinging mechanism swings to the ending position to be selected by the user, an external force opposite to the current swinging direction is applied to the swinging mechanism again to prevent the swinging mechanism from continuing to swing in the current direction, forcing the swinging mechanism to change the swinging direction again, and thus taking the position as the ending position.

It should be noted that, in an embodiment, the air outlet apparatus further includes a resistance sensor. When the swinging mechanism is subject to the resistance force opposite to the current swinging direction during the swinging of the swinging mechanism, the resistance sensor can receive resistance information and transmit a swinging direction change signal. After receiving the swinging direction change signal, the air outlet apparatus controls the swinging mechanism to change the swinging direction.

In another embodiment, the air outlet apparatus further includes a current detection structure. A current of the swinging mechanism changes if the swinging mechanism is subject to the resistance force opposite to the current swinging direction during the swinging of the swinging mechanism. The current detection structure is configured to detect current information of the swinging mechanism and transmit the swinging direction change signal when the current information exceeds a predetermined current threshold. The air outlet apparatus controls the swinging mechanism to change the swinging direction after receiving the swinging direction change signal.

In addition, in other embodiments, the control method further includes, subsequent to the operation at block S200: subsequent to receiving the customized air outlet angle instruction again, canceling the current starting position and the current ending position.

When the swinging mechanism swings between the starting position and the ending position, if the user re-issues the customized air outlet angle instruction, the current starting position and the current ending position are canceled after receiving the customized air outlet angle instruction again. The swinging mechanism no longer swings between the current starting position and the current ending position.

The air outlet apparatus re-enters the customized air outlet angle setting state.

The swinging mechanism is controlled to swing within the maximum allowable range.

After the current starting position and the current ending position are canceled, restrictions of the swinging range of the swinging mechanism are canceled. That is, the maximum allowable swinging range of the swinging mechanism is set as the current swinging range of the swinging mechanism to allow the swinging mechanism to swing within the maximum allowable range.

Two positions selected by the user within the maximum allowable range of the swinging mechanism are determined as a further starting position and another ending position respectively during the swinging of the swinging mechanism.

During the swinging of the swinging mechanism within the maximum allowable range, the user can successively select two mutually spaced new positions within the maximum allowable range. In this case, the two mutually spaced new positions are determined as the further starting position and the further ending position respectively.

The swinging mechanism is controlled to swing between the further starting position and the further ending position.

It should be understood that a range between the further starting position and the further ending position is a re-selected swinging range of the swinging mechanism. After the re-selected swinging range of the swinging mechanism is determined, the current swinging range of the swinging mechanism is adjusted to the re-selected swinging range.

In the above embodiments, the user needs to further select two positions within the current swinging range to further refine the customized air outlet angle. However, there is also a scenario where the user needs to select two positions beyond the current swinging range to change the customized air outlet angle. Therefore, in this embodiment, a control method for such a scenario is provided. Since the user needs to select two positions beyond the current swinging range, if the swinging range continues to swing within the current swinging range, the swinging range is unable to swing a position to be selected by the user. Consequently, when the user sends the customized air outlet angle instruction to the air outlet apparatus, the current starting position and the ending position are canceled as the air outlet apparatus receives this instruction. Restrictions on the swinging range of the swinging range are removed, allowing the swinging mechanism to swing within the maximum allowable range. In this case, the air outlet apparatus also enters the customized air outlet angle setting state. During the swinging of the swinging mechanism within the maximum allowable range, the user can sequentially select another two mutually spaced positions to be determined as the another starting position and the further ending position respectively. Therefore, the swinging range of the swinging range can be changed, enabling the air outlet apparatus to perform the air outlet operation within a newly defined customized air outlet range. Such a setting enables the user to select the further starting position and the further ending position beyond the current swinging range, sufficiently satisfying needs of the user and preventing the user from being unable to select the desired customized air outlet range.

An air outlet apparatus is further provided according to the present invention. The air outlet apparatus includes a body, a manipulation device, and a control device. The body includes a blower and a swinging mechanism. The swinging mechanism is configured to adjust an air outlet direction of the blower. The manipulation device is disposed at the body. The manipulation device is configured to receive a customized air outlet angle instruction. The control device is electrically connected to the swinging mechanism and the manipulating device. To satisfy implementation of the above control method for the air outlet apparatus, as illustrated in FIG. 7, the control device includes a processor 1001 (such as a CPU), a communication bus 1002, a user interface 1003, an information interface 1004, and a memory 1005. The communication bus 1002 is configured to realize connection communication between these components. The user interface 1003 may include a display screen and an input unit. An optional user interface 1003 may further include a standard wired interface or a wireless interface. The information interface 1004 may optionally include the standard wired interface or the wireless interface. The memory 1005 may be a high-speed Random Access Memory (RAM), or may be a non-volatile memory such as magnetic disk storage. The memory 1005 may optionally be a storage device independent of the aforementioned processor 1001.

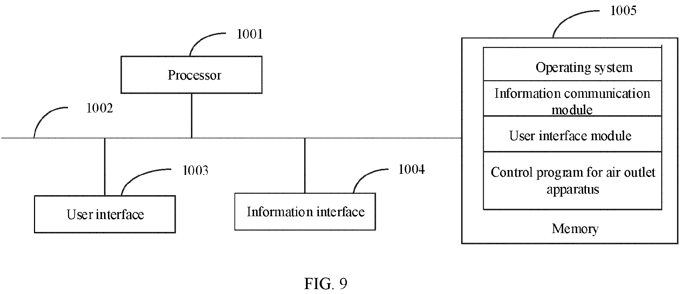

Those skilled in the art can understand that a structure of the control device shown in FIG. 9 does not limit the control device, which may include more or fewer components than those shown in the figures, combine certain components, or have different arrangements of the components.

As illustrated in FIG. 9, the memory 1005 that is a computer storage medium may include an operating system, a network communication module, a user interface module, and a control program for the air outlet apparatus.

In the control device illustrated in FIG. 9, the control program for the air outlet apparatus stored in the memory 1005 is invoked by the processor 1001, and the control method for the air outlet apparatus is executed.

It should be understood that, in an embodiment, the air outlet apparatus further includes a position detection device. The position detection device is arranged corresponding to the swinging mechanism to detect and obtain position information of the swinging mechanism.

In another exemplary embodiment of the present invention, the air outlet apparatus includes a fan, an air conditioner, or a heater. The control method for the air outlet apparatus according to the present invention is applicable to the air outlet apparatus that requires adjustment of the air outlet direction.

Although some embodiments of the present invention are described above, the scope of the present invention is not limited to the embodiments. Under the concept of the present invention, any equivalent structure transformation made using the contents of the specification and the accompanying drawings of the present invention, or any direct or indirect application of the contents of the specification and the accompanying drawings of the present invention in other related fields, shall fall within the scope of the present invention.

## Claims

1. A control method for an air outlet apparatus, wherein the air outlet apparatus comprises a swinging mechanism configured to control an air outlet direction, the control method comprising:
determining (S100), during an operation of the air outlet apparatus and swinging of the swinging mechanism, two positions selected by a user within a swinging range of the swinging mechanism as a starting position and an ending position respectively subsequent to receiving a customized air outlet angle instruction; and
controlling (S200) the swinging mechanism to swing between the starting position and the ending position.

2. The control method according to claim 1, wherein said determining (S100), during the operation of the air outlet apparatus and the swinging of the swinging mechanism, the two positions selected by the user within the swinging range of the swinging mechanism as the starting position and the ending position respectively subsequent to receiving the customized air outlet angle instruction comprises:
controlling (S110), in response to receiving the customized air outlet angle instruction, the swinging mechanism to operate when the air outlet apparatus is operating and the swinging mechanism is in a stopped state; and
determining (S120) two positions selected by the user within the swinging range of the swinging mechanism as the starting position and the ending position respectively during the swinging of the swinging mechanism.

3. The control method according to claim 2, wherein said controlling (S110), in response to receiving the customized air outlet angle instruction, the swinging mechanism to operate when the air outlet apparatus is operating and the swinging mechanism is in the stopped state comprises:
controlling (S111), in response to receiving the customized air outlet angle instruction, the swinging mechanism to swing within a maximum allowable range when the swinging mechanism is in the stopped state.

4. The control method according to claim 2, wherein said controlling (S110), in response to receiving the customized air outlet angle instruction, the swinging mechanism to operate when the air outlet apparatus is operating and the swinging mechanism is in the stopped state comprises:
controlling (S112), in response to receiving the customized air outlet angle instruction, the swinging mechanism to swing within a predetermined swinging range when the swinging mechanism is in the stopped state, wherein the predetermined swinging range is symmetrical with respect to a center of a maximum allowable swinging range of the swinging mechanism.

5. The control method according to claim 2, wherein said controlling (S110), in response to receiving the customized air outlet angle instruction, the swinging mechanism to operate when the air outlet apparatus is operating and the swinging mechanism is in the stopped state comprises:
matching (S113), in response to receiving the customized air outlet angle instruction, a historical swinging range corresponding to a customized air outlet angle based on the customized air outlet angle instruction when the swinging mechanism is in the stopped state; and
controlling (S114) the swinging mechanism to swing within the historical swinging range.

6. The control method according to any one of claims 1 to 5, wherein said determining (S100), during the operation of the air outlet apparatus and the swinging of the swinging mechanism, the two positions selected by the user within the swinging range of the swinging mechanism as the starting position and the ending position respectively subsequent to receiving the customized air outlet angle instruction comprises:
during the operation of the air outlet apparatus and the swinging of the swinging mechanism, in response to receiving one position selected by the user within the swinging range of the swinging mechanism, when a further position selected by the user within the swinging range of the swinging mechanism is received within a predetermined period of time, determining (S130) the one position and the further position as the starting position and the ending position respectively.

7. The control method according to any one of claims 1 to 6, further comprising, subsequent to said controlling the swinging mechanism to swing between the starting position and the ending position:
controlling (S300), in response to receiving the customized air outlet angle instruction again, the swinging mechanism to swing in a current swinging range;
determining (S400) two new positions selected by the user within the swinging range of the swinging mechanism as a new starting position and a new ending position respectively during the swinging of the swinging mechanism; and
controlling (S500) the swinging mechanism to swing between the new starting position and the new ending position.

8. The control method according to any one of claims 1 to 8, wherein said determining (S100), during the operation of the air outlet apparatus and the swinging of the swinging mechanism, the two positions selected by the user within the swinging range of the swinging mechanism as the starting position and the ending position respectively subsequent to receiving the customized air outlet angle instruction comprises:
during the operation of the air outlet apparatus and the swinging of the swinging mechanism, determining (S140), in response to receiving the customized air outlet angle instruction, a received position of resistance opposite to a swinging direction as a first position, and controlling the swinging mechanism to change the swinging direction; and
determining (S 150) a re-received position of resistance opposite to the swinging direction as a second position, controlling the swinging mechanism to change the swinging direction, and determining the first position and the second position as the starting position and the ending position respectively.

9. An air outlet apparatus, comprising:
a body comprising a blower and a swinging mechanism configured to control an air outlet direction of the blower;
a manipulation device disposed at the body, and configured to receive a customized air outlet angle instruction; and
a control device electrically connected to the swinging mechanism and the manipulating device, the control device comprising a memory (1005), a processor (1001), and a control program for the air outlet apparatus stored on the memory (1005) and executable on the processor (1001),
wherein the control program for the air outlet apparatus is configured to implement the steps of the control method according to any one of claims 1 to 8.

10. The air outlet apparatus according to claim 9, comprising a fan, an air conditioner, or a heater.
